# EUROPÄISCHE PATENTSCHRIFT

(11) **EP 1 861 271 B1**
(45) Veröffentlichungstag und Bekanntmachung des Hinweises auf die Patenterteilung: **11.11.2009**
(21) Anmeldenummer: 06725114.0
(22) Anmeldetag: 16.03.2006
(51) Int. Cl.: B60J 3/02

(54) **BEFESTIGUNGSVORRICHTUNG FÜR EIN FAHRZEUG ZUR BEFESTIGUNG EINER KOMPONENTE, EINE KOMPONENTE FÜR EIN FAHRZEUG, INSBESONDERE EINE SONNENBLENDE**
FIXING DEVICE FOR A VEHICLE FOR FIXING A COMPONENT, COMPONENT FOR A VEHICLE, ESPECIALLY A SUN VISOR
DISPOSITIF DE FIXATION D'UN VEHICULE PERMETTANT LA FIXATION D'UN COMPOSANT, COMPOSANT D'UN VEHICULE, NOTAMMENT PARE-SOLEIL

(30) Priorität: 17.03.2005 DE 102005012860
(43) Veröffentlichungstag der Anmeldung: 05.12.2007
(73) Patentinhaber: Johnson Controls Interiors GmbH & Co. KG, 47929 Grefrath (DE)
(72) Erfinder: SELVINI, Frédéric, F-57550 Falck (FR); NYZNYK, André, F-57880 Ham Sous Varsberg (FR)
(74) Vertreter: Schwöbel, Karl T.
(86) Internationale Anmeldenummer: PCT/EP2006/060811
(87) Internationale Veröffentlichungsnummer: WO 2006/097517

(56) Entgegenhaltungen:
- WO-A-03/104033
- DE-B- 1 014 446
- DE-U1- 8 104 417
- FR-A- 2 755 404
- US-A- 4 765 675
- US-A- 6 131 986
- US-B1- 6 402 221

## Beschreibung

Die vorliegende Erfindung betrifft eine Befestigungsvorrichtung für ein Fahrzeug zur Befestigung einer Komponente, insbesondere einer Sonnenblende, wobei die Befestigungsvorrichtung einen um eine erste, insbesondere vertikale, Drehachse schwenkbaren, jedoch ansonsten gegenüber der Fahrzeugkarosserie fixierten Auslegerarm aufweist, wobei die Komponente gegenüber dem Auslegerarm um eine zweite, insbesondere horizontale, Drehachse klappbar ist. Die vorliegende Erfindung betrifft weiterhin die Komponente, insbesondere eine Sonnenblende. Eine solche Befestigungsvorrichtung ist aus US 6 131 986, bekannt.

In Fahrzeugen werden häufig Sonnenblenden als Sonnenschutz für die Insassen eingesetzt.

Die Druckschrift DE 200 12 488 U1 offenbart eine Sonnenblende für ein Fahrzeug mit einem L-förmigen Haltemittel, wobei das Haltemittel am Fahrzeugdach um eine vertikale Achse drehbar gelagert und an einer Ecke der Sonnenschutzfläche angeordnet ist. Die Sonnenschutzfläche ist von einer Position, in der sie parallel zu dem Fahrzeugdach angeordnet ist, in eine im wesentlichen vertikal und quer zur Fahrtrichtung angeordnete Position klappbar. Durch Drehung um die vertikale Achse ist sie so drehbar, dass sie sich in Fahrtrichtung erstreckt. Die Sonnenblende weist eine oder mehrere Zusatzblenden auf, mittels der die schützende Fläche bei in vertikale Richtung geklappter Sonnenschutzfläche vergrößerbar ist.

Die Druckschrift DE 101 53 153 A1 offenbart eine Sonnenblende mit einem um eine vertikale Achse drehbaren Lagerbock, an dem eine abkragende Halterung angeordnet ist. An der Halterung ist ein Sonnenblendenkörper um eine horizontale Achse drehbar und im wesentlichen mittig gegenüber dem Lagerbock angeordnet. Auch diese Sonnenblende ist von einer parallel zum Fahrzeugdach angeordneten Position in eine im wesentlichen vertikale Position klappbar und um die vertikale Achse so drehbar, dass sie im wesentlichen in Fahrtrichtung verläuft.

Aufgabe der Erfindung ist es, eine Befestigungsvorrichtung für ein Fahrzeug zur Befestigung einer Komponente, insbesondere einer Sonnenblende, zu schaffen mittels der die Komponente sehr flexibel im Fahrzeug positionierbar ist, sehr vielfältig einstellbar ist und damit gehobenen Komfortansprüchen eines Benutzers gerecht werden kann.

Diese Aufgabe wird erfindungsgemäß durch die Merkmale des Patentanspruches 1 gelöst, insbesondere, mit einer Befestigungsvorrichtung für ein Fahrzeug zur Befestigung einer Komponente, insbesondere einer Sonnenblende, wobei die Befestigungsvorrichtung einen um eine erste, insbesondere vertikale, Drehachse schwenkbaren, jedoch ansonsten gegenüber der Fahrzeugkarosserie fixierten Auslegerarm aufweist, wobei die Komponente gegenüber dem Auslegerarm um eine, insbesondere horizontale, zweite Drehachse klappbar ist, wobei zusätzlich zu der Klappbarkeit der Komponente um die zweite Drehachse die Komponente relativ zum Auslegerarm positionsveränderbar vorgesehen ist.

Der Auslegerarm ermöglicht eine flexible Anordnung der Komponente im Fahrzeug in Abhängigkeit von den räumlichen Verhältnissen des Fahrzeugs. Bei Verwendung der erfindungsgemäßen Befestigungsvorrichtung für die Befestigung einer Sonnenblende kann der Auslegerarm beispielsweise an den Abstand zur Windschutzscheibe bzw. zu einem Seitenfenster, die Höhe des Fahrzeugdaches und/oder die Neigung der Windschutzscheibe angepasst werden.

Eine zusätzliche Positionsveränderbarkeit gegenüber der Klappbarkeit um die zweite Drehachse im Sinne der vorliegenden Erfindung ist eine lineare Verschiebbarkeit entlang einer Achse oder Stange, oder eine Drehbarkeit der Komponente um eine weitere (dritte) Drehachse. Die zusätzliche Positionsveränderbarkeit ermöglicht eine sehr flexible Beweglichkeit der Komponente im Fahrzeug. Bei Verwendung der Befestigungsvorrichtung zur Befestigung einer Sonnenblende ist diese daher sehr wirkungsvoll als Blendschutz einstellbar.

Eine Komponente ist beispielsweise eine Sonnenblende, ein Display oder eine Lampe.

Die Komponente ist mit einem an dem Auslegerarm fixierten und gegenüber diesem um die zweite Drehachse klappbaren Klapparm verbunden und relativ zum Klapparm beweglich vorgesehen. Der Klapparm ermöglicht eine weitere Anpassung der Befestigungsvorrichtung an die räumlichen Verhältnisse des Fahrzeugs. Bei Verwendung der Befestigungsvorrichtung zur Befestigung einer Sonnenblende ermöglicht der Klapparm insbesondere die Anpassung an die Höhe des Fahrzeugdaches bzw. die Kopfhöhe des Benutzers.

In einer bevorzugten Ausführungsform ist die Komponente entlang dem Klapparm längsverschiebbar vorgesehen, so dass sie vom Nutzer selbst verschiebbar ist. Der Nutzer kann die Komponente daher an seine Erfordernisse, beispielsweise an seine Größe, anpassen. Eine mittels der erfindungsgemäßen Befestigungsvorrichtung befestigte Sonnenblende kann ein Nutzer an seine Augenhöhe anpassen.

In einer weiteren bevorzugten Ausführungsform ist die Komponente gegenüber dem Klapparm um eine dritte Drehachse drehbar vorgesehen. Bevorzugt ist die dritte Drehachse im wesentlichen parallel zu der zweiten Drehachse angeordnet, so dass der Klapparm bei um die dritte Drehachse gedrehter, d. h. ausgeklappter Position der Komponente als Verlängerung wirkt. Weiterhin kann die Komponente neigbar (dritte Drehachse im wesentlichen in Fahrtrichtung) vorgesehen sein, beispielsweise mittels einem Kugelgelenk, so dass der Winkel der Komponente relativ zum Klapparm im wesentlichen beliebig einstellbar ist.

Der Fachmann versteht, dass auch die Fixierung des Klapparms am Auslegerarm mittels einem Kugelgelenk möglich ist, so dass auch der Klapparm relativ zum Auslegerarm im wesentlichen in einem beliebigen Winkel einstellbar ist.

Vorzugsweise umfasst der Auslegerarm ein Haltemittel und ein Trägerteil. Das Haltemittel ist bevorzugt relativ zur Fahrzeugkarosserie drehfest angeordnet, wobei das Trägerteil um die erste Drehachse drehbar ist. Ebenfalls bevorzugt ist das Haltemittel relativ zur Fahrzeugkarosserie drehbar vorgesehen, wobei das Trägerteil drehfest am Haltemittel angeordnet ist.

Die Befestigungsvorrichtung ist bevorzugt zumindest teilweise aus einem Kunststoff oder Metall hergestellt. Ebenfalls bevorzugt umfassen das Trägerteil und/oder der Klapparm ein oder zwei Streben. Vorzugsweise sind die Streben aus einem Draht hergestellt, so dass sie sehr kostengünstig herstellbar sind. In einer ebenfalls bevorzugten Ausführungsform erstreckt sich der Klapparm flächig, so dass er selbst als Sonnenblende wirkt.

Besonders bevorzugt ist der Abstand zwischen der ersten Drehachse und der zweiten Drehachse veränderbar, so dass der Nutzer ihn selbst anpassen kann.

In einer bevorzugten Ausführungsform umfasst die Befestigungsvorrichtung ein Stoppmittel, das die Positionsveränderbarkeit der Komponente begrenzt, so dass keine Positionen einstellbar sind, die die Bedienung der Komponente erschweren oder den Nutzer behindern. Die Bedienung der Komponente ist daher einfach und sicher möglich.

Bei Verwendung der Befestigungsvorrichtung zur Befestigung einer Sonnenblende ist insbesondere die Drehung des Auslegerarms um die erste Drehachse mittels dem Stoppmittel anhaltbar, so dass die Sonnenblende nicht durch den Nutzer so gedreht werden kann, dass sie während der Fahrt nicht mehr für ihn erreichbar ist.

Besonders bevorzugt umfasst das Stoppmittel ein Sensormittel. Dadurch ist beispielsweise das Schwenken der Komponente um die erste Drehachse erfassbar. Das Einstellen der Komponente ist daher beispielsweise zumindest teilweise automatisierbar oder die Einstellung der Komponente kann angezeigt werden.

Ebenfalls bevorzugt kann das Schwenken, Klappen, Drehen oder Verschieben der Komponente gebremst vorgesehen sein, so dass der mögliche Verstellbereich der Komponente für den Nutzer spürbar und daher die Bedienung der Komponente einfacher und sicherer ist.

Die erfindungsgemäße Befestigungsvorrichtung ist sehr flexibel einsetzbar und ermöglicht dem Nutzer eine sehr vielfältige Einstellbarkeit einer mittels der Befestigungsvorrichtung befestigten Komponente. Durch ihre vielfältige Einstellbarkeit ist sie im Fahrzeug sehr flexibel positionierbar und leicht an die räumlichen Verhältnisse im Fahrzeug anpassbar. Sie ist leicht bedienbar und kostengünstig herstellbar.

Ein weiterer Gegenstand der vorliegenden Erfindung ist eine Komponente für ein Fahrzeug mit einer erfindungsgemäßen Befestigungsvorrichtung, insbesondere eine Sonnenblende. Die Komponente ist sehr flexibel im Fahrzeug positionierbar. Außerdem ist sie sehr einfach und vielfältig durch den Nutzer einstellbar.

Im Folgenden wird die Erfindung anhand von **Figuren** beschrieben. Die **Figuren** sind lediglich beispielhaft und schränken den allgemeinen Erfindungsgedanken nicht ein.
- **Figur 1**: zeigt schematisch eine erfindungsgemäße Befestigungsvorrichtung mit einer Komponente in einer perspektivischen Ansicht.
- **Figur 2**: zeigt eine Seitenansicht einer Grundform einer erfindungsgemäßen Befestigungsvorrichtung mit einer Komponente.
- **Figur 3**: zeigt eine Seitenansicht einer weiteren bevorzugten Ausführungsform einer Befestigungsvorrichtung mit einer Komponente.
- **Figur 4**: zeigt eine Seitenansicht einer weiteren bevorzugten Ausführungsform einer erfindungsgemäßen Befestigungsvorrichtung mit einer Komponente.
- **Figur 5**: zeigt Seitenansichten der Befestigungsvorrichtungen der Ausführungsformen der **Figuren 3 - 5****.**
- **Figur 6**: zeigt schematisch die erfindungsgemäße Befestigungsvorrichtung mit Komponente und ihre Drehbarkeit um die erste Drehachse in einer vom Fahrzeugdach aus gesehenen Draufsicht in drei Positionen.
- **Figur 7**: zeigt eine perspektivische Ansicht einer erfindungsgemäßen Befestigungsvorrichtung mit einer Komponente, wobei der Klapparm der Befestigungsvorrichtung sich flächig erstreckt.

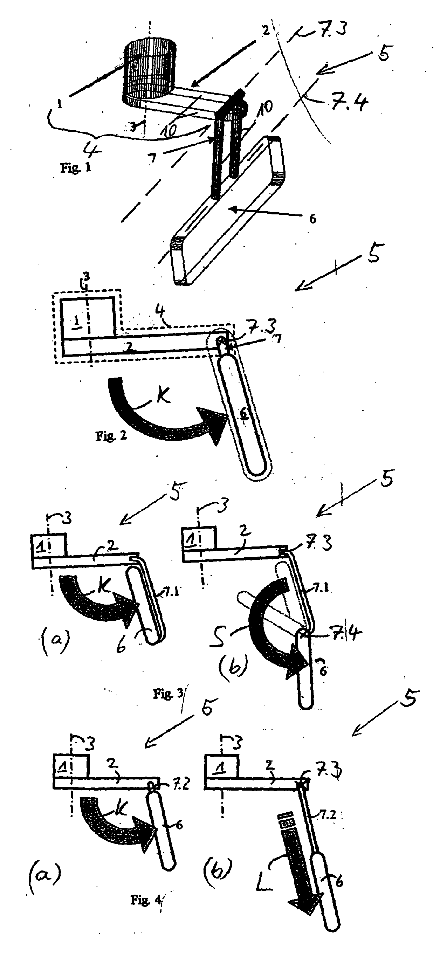

**Figur 1** zeigt schematisch eine erfindungsgemäße Befestigungsvorrichtung 5 mit einer Komponente 6 in einer perspektivischen Ansicht. Die Befestigungsvorrichtung 5 weist einen um eine erste, insbesondere vertikale, Drehachse 3 schwenkbaren Auslegerarm 4 auf, der ansonsten gegenüber der Fahrzeugkarosserie fixiert ist. Der Auslegerarm 4 umfasst ein Haltemittel 1 und ein Trägerteil 2. Die Komponente 6 ist gegenüber dem Auslegerarm 4 um eine, insbesondere horizontale, zweite Drehachse 7.3 klappbar. Zusätzlich zu ihrer Klappbarkeit um die zweite Drehachse 7.3 ist die Komponente 6 relativ zum Auslegerarm 4 positionsveränderbar vorgesehen. Sie ist an einem an dem Auslegerarm 4 fixierten Klapparm 7 angeordnet, wobei der Klapparm 7 gegenüber dem Auslegerarm 4 um die zweite Drehachse 7.3 klappbar ist. Weiterhin kann die Komponente 6 um eine dritte Drehachse 7.4 drehbar am Klapparm 7 angeordnet sein, wobei die dritte Drehachse 7.4 insbesondere parallel zur zweiten Drehachse 7.3, wie beispielhaft in **Figur 1** gezeigt, oder im wesentlichen senkrecht zur zweiten Drehachse 3, wie beispielhaft in **Figur 2** gezeigt, oder in einem anderen Winkel zu den beiden Drehachsen 3, 7.3 angeordnet ist.

Das Trägerteil 2 und der Klapparm 7 umfassen in dieser Ausführungsform jeweils zwei Streben 10.

**Figur 2** zeigt eine Seitenansicht einer Grundform einer Befestigungsvorrichtung 5 mit einer Komponente 6. Die Befestigungsvorrichtung 5 umfasst den um die erste Drehachse 3 schwenkbaren Auslegerarm 4 mit dem Haltemittel 1 und dem Trägerteil 2. Die Komponente 6 ist zusammen mit dem Klapparm 7 um die zweite Drehachse 7.3 geklappt, wobei die Klappbewegung mittels einem Pfeil K angedeutet ist. Insbesondere ist eine zusätzliche Positionsveränderbarkeit der Komponente 6 vorgesehen, die eine Beweglichkeit der Komponente 6 zusätzlich zum Klappen der Komponente 6 um die zweite Drehachse 7.3 vorsieht.

Das Drehen um die erste und zweite Drehachse 3, 7.3 erfolgt jeweils reversibel.

**Figur 3** zeigt eine Seitenansicht einer besonders bevorzugten Ausführungsform einer erfindungsgemäßen Befestigungsvorrichtung 5 mit einer Komponente 6. Im Gegensatz zur **Figur 2** ist der Klapparm 7 hier als Verlängerung 7.1 mit zwei Enden vorgesehen, wobei die Verlängerung 7.1 an dem einen Ende an dem Trägerteil 2 um die zweite Drehachse 7.3 klappbar angeordnet ist, und wobei die Komponente 6 an dem anderen Ende um eine dritte Drehachse 7.4, die im wesentlichen parallel zu der zweiten Drehachse 7.3 verläuft, drehbar angeordnet ist. Das Drehen um dritte Drehachse 7.4 erfolgt ebenfalls reversibel.

Darstellung **a** zeigt die Komponente 6 nach dem Klappen der Verlängerung 7.1 um die zweite Drehachse 7.3, wobei die Klapprichtung mittels dem Pfeil K gezeigt ist.

Darstellung **b** zeigt die Komponente 6 in einer zusätzlich um die dritte Drehachse 7.4 gedrehten Position, wobei die Drehrichtung mittels einem Pfeil S gezeigt ist.

**Figur 4** zeigt eine Seitenansicht einer weiteren bevorzugten Ausführungsform einer erfindungsgemäßen Befestigungsvorrichtung 5 mit einer Komponente 6. Im Gegensatz zur Ausführungsform der **Figur 3** ist der Klapparm 7 dieser Ausführungsform als Teleskoparm 7.2 ausgebildet. In der Darstellung **a** ist die Komponente 6 wiederum um die zweite Drehachse 7.3 geklappt, während sie in der Darstellung **b** zusätzlich längsverschoben ist. Die Verschiebung der Komponente 6 ist mittels einem Pfeil L gezeigt. Die Komponente 6 kann in die Gegenrichtung zurückgeschoben werden. In dieser Ausführungsform ist keine dritte Drehachse 7.4 vorgesehen.

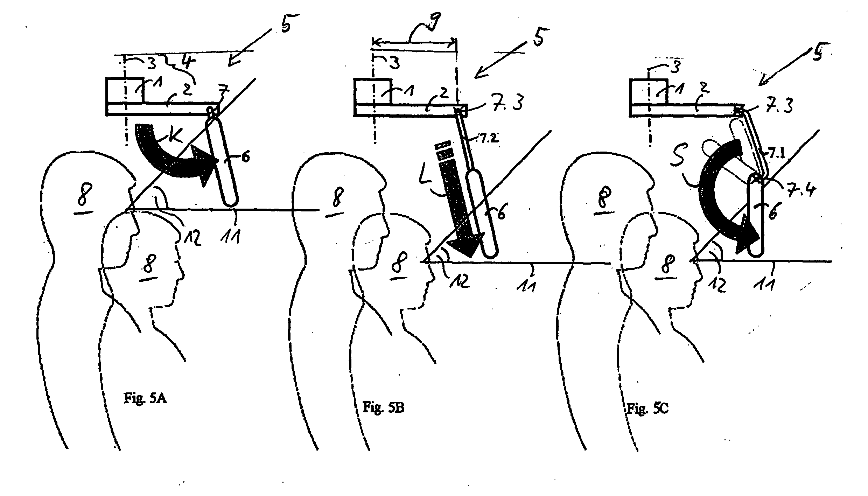

**Figur 5** zeigt in den Darstellungen **A - C** jeweils eine Seitenansicht der Befestigungsvorrichtung 5 der Ausführungsformen der **Figuren 3 - 5****,** wobei die Komponente 6 insbesondere eine Sonnenblende ist. Im Folgenden werden daher die Begriffe Komponente 6 und Sonnenblende synonym verwendet.

Die Sonnenblende 6 mit der erfindungsgemäßen Befestigungsvorrichtung 5 ist wie eine herkömmliche Sonnenblende um die zweite Drehachse 7.3 aufklappbar.

Die erfindungsgemäße Befestigungsvorrichtung 5 wird bevorzugt oberhalb des Kopfes 8 einer einen nicht dargestellten Fahrzeugsitz nutzenden Person angeordnet. Der Abstand 9 der ersten Drehachse 3 von der zweiten Drehachse 7.3 ist von dem Benutzer bevorzugt aber nicht zwingend an die Fahrzeuggegebenheiten und/oder Komfortwünsche anpassbar, beispielsweise durch Veränderung der Länge des Trägerteils 2. Daher ist der Abstand 9 beispielsweise in Abhängigkeit von dem Abstand der Befestigungsvorrichtung 5 oder der Neigung von Windschutzscheiben oder Seitenfenstern anpassbar, da diese in verschiedenen Kraftfahrzeugtypen wie beispielsweise Geländewagen oder Limousinen stark variiert.

Durch Verwendung eines Teleskoparms 7.2 als Klapparm 7, wie in Darstellung **B** gezeigt, oder einer Verlängerung 7.1 als Klapparm 7, wie in Darstellung **C** gezeigt, ist die Höhe der Sonnenblende 6, das heißt die Position der Sonnenblende in Z-Richtung eines üblichen Fahrzeugkoordinatensystems, so einstellbar, dass die Blendschutzwirkung der Sonnenblende 6 auch für eine kleine den Fahrzeugsitz nutzende Person ausreichend sichergestellt ist.

Die Darstellung zeigt die Blickrichtung 11 und den Blendschutzwinkel 12 eines Nutzers. Die erfindungsgemäße Sonnenblende 6 ist durch den Nutzer so einstellbar, dass die Blickrichtung 11 des Nutzers nicht durch die Sonnenblende 6 verdeckt ist. Gleichzeitig ist ein optimaler Blendschutz sichergestellt.

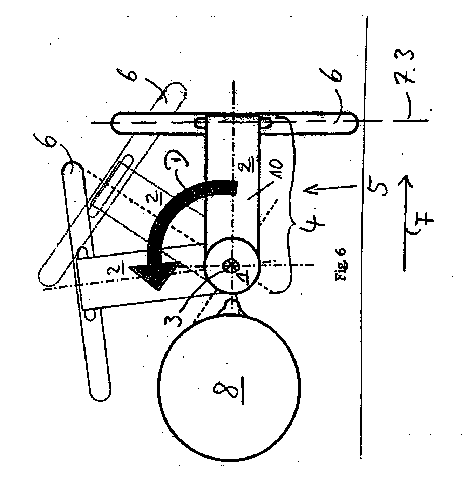

**Figur 6** zeigt schematisch die Sonnenblende 6 der **Figur 5** im Fahrzeug und ihre mittels der Befestigungsvorrichtung 5 ermöglichte Schwenkbarkeit um die erste Drehachse 3 in einer vom Fahrzeugdach aus gesehenen Draufsicht in drei Positionen. Die Darstellung zeigt die Sonnenblende 6 in um die zweite Drehachse 7.3 geklappter Position. Das Haltemittel 1 ist bevorzugt im wesentlichen mittig und vor dem Kopf des Nutzers angeordnet, wobei das Trägerteil 2 in Fahrtrichtung F des Fahrzeugs weist, so dass die Sonnenblende 6 vom Haltemittel 1 und vom Kopf des Nutzers beabstandet ist. Die Fahrtrichtung ist mittels einem Pfeil F angedeutet. Durch Drehung des Auslegerarms 4 um die erste Achse 3 kann die Sonnenblende 6 so geschwenkt werden, dass auch ein Blendschutz gegen seitlich vom Kopf einfallendes Licht möglich ist. Das Schwenken um die erste Drehachse 3 ist mittels dem Pfeil D gezeigt.

Das in der **Figur 6** dargestellte Trägerteil 2 umfasst nur eine Strebe 10.

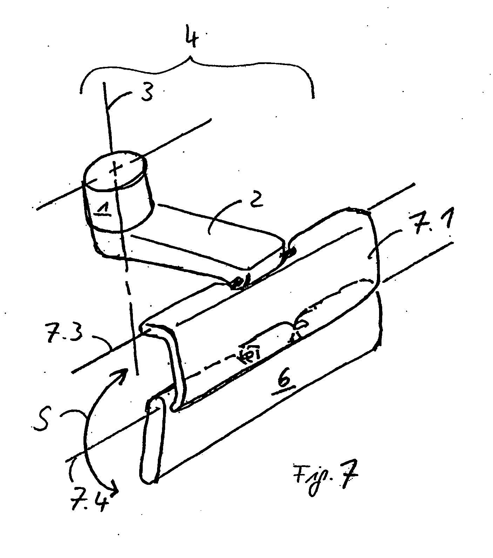

**Figur 7** zeigt eine perspektivische Ansicht einer erfindungsgemäßen Befestigungsvorrichtung 5 mit einer Komponente 6, wobei der Klapparm 7 der Befestigungsvorrichtung 5 sich flächig erstreckt. Der Klapparm 7 wirkt daher in dieser Ausführungsform nicht nur als Verlängerung 7.1, sondern er kann gleichzeitig als Sonnenblende genutzt werden. Weiterhin ist im wesentlichen parallel der zweiten Drehachse 7.3 zusätzlich eine dritte Drehachse 7.4 vorgesehen, um die die Sonnenblende 6 bei um die zweite Drehachse 7.3 geklappter Verlängerung 7.1 drehbar ist. Die Darstellung zeigt die Sonnenblende 6 in um die dritte Drehachse 7.4 gedrehter Position. Sichtbar ist, dass die Blendschutzfläche durch die flächige Erstreckung der Verlängerung 7.1 erheblich vergrößert ist, so dass die Blendschutzwirkung für einen Nutzer erheblich verbessert ist.

Der Fachmann versteht, dass sich auch ein als Teleskoparm 7.2 ausgebildeter Klapparm 7 flächig erstrecken kann, so dass eine Verlängerung des Teleskoparms 7.2 eine stetig vergrößerte Blendschutzfläche bewirkt.

Die erfindungsgemäße Befestigungsvorrichtung mit der Sonnenblende 6 ermöglicht einen Blendschutz in allen erforderlichen Positionen, insbesondere auch bei Lichteinfall im Bereich der A-Säule des Fahrzeugs. Sie wird besonders bevorzugt in Fahrzeugen mit hoher Windschutzscheibe und schmalen Heck-Querstreben im Fahrzeugdach verwendet.

### Bezugszeichenliste

- 1: Haltemittel
- 2: Trägerteil
- 3: Erste Drehachse
- 4: Auslegerarm
- 5: Befestigungsvorrichtung
- 6: Komponente
- 7: Klapparm
- 7.1: Verlängerung
- 7.2: Teleskoparm
- 7.3: Zweite Drehachse
- 7.4: Dritte Drehachse
- 8: Kopf eines Nutzers
- 9: Abstand zwischen der ersten Drehachse und der zweiten Drehachse
- 10: Strebe
- 11: Blickrichtung
- 12: Blendschutzwinkel

## Patentansprüche

1. Befestigungsvorrichtung (5) für ein Fahrzeug zur Befestigung einer Komponente (6), insbesondere einer Sonnenblende, wobei die Befestigungsvorrichtung (5) einen um eine erste, im Wesentlichen vertikale Drehachse (3) schwenkbaren ansonsten gegenüber der Fahrzeugkarosserie Auslegerarm (4) aufweist, wobei die Komponente (6) gegenüber dem Auslegerarm (4) um eine zweite, im Wesentlichen horizontale Drehachse (7.3) klappbar ist, wobei zusätzlich zu der Klappbarkeit der Komponente (6) um die zweite Drehachse (7.3) die Komponente (6) relativ zum Auslegerarm (4) positionsveränderbar vorgesehen ist, fixierbaren, wobei die Komponente (6) mit einem an dem Auslegerarm (4) fixierten und gegenüber diesem um die zweite Drehachse (7.3) klappbaren Klapparm (7) verbunden und relativ zum Klapparm (7) beweglich vorgesehen ist, **dadurch gekennzeichnet, dass** die Komponente (6) entlang dem Klapparm (7) längsverschiebbar vorgesehen ist und/oder um eine dritte Drehachse (7.4) drehbar vorgesehen ist, wobei die dritte Drehachse (7.4) im wesentlichen parallel zur zweiten Drehachse (7.3) angeordnet ist.

2. Befestigungsvorrichtung (5) nach Anspruch 1, **dadurch gekennzeichnet, dass** der Auslegerarm (4) ein Haltemittel (1) und ein Trägerteil (2) umfasst.

3. Befestigungsvorrichtung (5) nach einem der vorherigen Ansprüche, **dadurch gekennzeichnet, dass** der Abstand (9) zwischen der ersten Drehachse (3) und der zweiten Drehachse (7.3) veränderbar ist.

4. Befestigungsvorrichtung (5) nach einem der vorherigen Ansprüche, **dadurch gekennzeichnet, dass** sie ein Stoppmittel umfasst, das die Positionsveränderbarkeit der Komponente (6) begrenzt.

5. Befestigungsvorrichtung (5) nach Anspruch 4, **dadurch gekennzeichnet, dass** das Stoppmittel ein Sensormittel zum Erfassen des Anhaltens der Drehung des Auslegerarms (4) um die erste Drehachse (3) umfasst.

## Claims

1. Fixing device (5) for a vehicle for fixing a component (6), especially a sun visor, the fixing device (5) comprising a cantilever arm (4) which may be pivoted about a first, substantially vertical rotational axis (3) but can otherwise be fixed in relation to the vehicle body, the component (6) being able to be tilted in relation to the cantilever arm (4) about a second, substantially horizontal rotational axis (7.3), in addition to the fact that the component (6) may be tilted about the second rotational axis (7.3), the component (6) being provided so that the position thereof may be modified in relation to the cantilever arm (4), the component (6) being connected to a tilting arm (7) fixed to the cantilever arm (4) and which may be tilted relative thereto about the second rotational axis (7.3), and is provided to be mobile relative to the tilting arm (7), **characterized in that** the component (6) is provided to be longitudinally displaceable along the tilting arm (7), and/or is provided to be rotatable about a third rotational axis (7.4), the third rotational axis (7.4) being arranged substantially parallel to the second rotational axis (7.3).

2. Fixing device (5) as claimed in Claim 1, **characterized in that** the cantilever arm (4) comprises a retaining means (1) and a carrier part (2).

3. Fixing device (5) as claimed in one of the preceding claims, **characterized in that** the spacing (9) between the first rotational axis (3) and the second rotational axis (7.3) may be altered.

4. Fixing device (5) as claimed in one of the preceding claims, **characterized in that** it comprises a stop means which limits the ability to modify the position of the component (6).

5. Fixing device (5) as claimed in Claim 4, **characterized in that** the stop means comprises a sensor means for detecting the inhibiting of the rotation of the cantilever arm (4) about the first rotational axis (3).

## Revendications

1. Dispositif de fixation (5) pour un véhicule pour la fixation d'un composant (6), en particulier un pare-soleil, le dispositif de fixation (5) présentant un bras de potence (4) pouvant pivoter autour d'un premier axe de rotation (3) essentiellement vertical mais pouvant par ailleurs être fixé à la carrosserie, le composant (6) pouvant être rabattu par rapport au bras de potence (4) autour d'un deuxième axe de rotation (7.3) essentiellement horizontal, et en plus de sa capacité de rabattement autour du deuxième axe de rotation (7.3), le composant (6) pouvant modifier sa position par rapport au bras de potence (4), le composant (6) étant connecté à un bras rabattable (7) fixé au bras de potence (4) et pouvant être rabattu par rapport à celui-ci autour du deuxième axe de rotation (7.3), et étant mobile par rapport au bras rabattable (7), **caractérisé en ce que** le composant (6) est prévu de manière déplaçable en longueur le long du bras rabattable (7) et/ou peut tourner autour d'un troisième axe de rotation (7.4), le troisième axe de rotation (7.4) étant disposé essentiellement parallèlement au deuxième axe de rotation (7.3).

2. Dispositif de fixation (5) selon la revendication 1, **caractérisé en ce que** le bras de potence (4) comprend un moyen de retenue (1) et une partie de support (2).

3. Dispositif de fixation (5) selon l'une quelconque des revendications précédentes, **caractérisé en ce que** la distance (9) entre le premier axe de rotation (3) et le deuxième axe de rotation (7.3) peut être modifiée.

4. Dispositif de fixation (5) selon l'une quelconque des revendications précédentes, **caractérisé en ce qu'**il comprend un moyen d'arrêt qui limite la capacité de variation de la position du composant (6).

5. Dispositif de fixation (5) selon la revendication 4, **caractérisé en ce que** le moyen d'arrêt comprend un moyen de capteur pour détecter l'arrêt de la rotation du bras de potence (4) autour du premier axe de rotation (3).
